# EUROPEAN PATENT APPLICATION

(11) **EP 1 251 457 A2**
(43) Date of publication of application: **23.10.2002**
(21) Application number: 02251919.3
(22) Date of filing: 18.03.2002
(51) Int. Cl.: G06K 19/00

(54) **Portable information unit and a control method for the portable information unit together with a recording medium and a control program**

(30) Priority: 27.03.2001 JP 2001091113
(71) Applicant: Seiko Epson Corporation, Shinjuku-ku, Tokyo 163-0811 (JP)
(72) Inventor: Fujisawa, Teruhiko, Seiko Epson Corporation, Suwa-shi, Nagano-ken 392-8502 (JP); Ishiguro, Satoshi, Seiko Epson Corporation, Suwa-shi, Nagano-ken 392-8502 (JP)
(74) Representative: Sturt, Clifford Mark

(57) **Abstract**

The invention seeks to obtain a high customer collecting effect and a high advertisement effect or to enhance a users' sense of unity with an attraction in an amusement facility such as a theme park by displaying effective information with the use of a non-contact-IC-card information processing function when the user carries a non-contact IC card. Information displayed on the display screen of the wrist-watch-type information unit 50 is changed to predetermined information, such as publicity information, advertisement information, or information prompting a user's behavior (prompting a user to come to an amusement facility), according to an elapsed time from a predetermined reference time specified by each of attraction systems 40-A to 40-N or a time left until a predetermined reference time

## Description

The present invention relates to portable information units, control methods for portable information units, recording media, and control programs, and more particularly, to a portable information unit, a control method for a portable information unit, a recording medium, and a control program which allow various pieces of information to be displayed by digital control and also allow data communication with an external unit.

There has been conventionally known magnetic cards as information recording media for recording various pieces of information. The magnetic cards can be made at a low cost, but cannot record a vast amount of information and has a difficulty in maintaining confidentiality.

In recent years, to solve these problems, IC cards which can record a vast amount of information and can easily maintain confidentiality were developed and have been spread.

It is demanded that, among such IC cards, non-contact-type IC cards (hereinafter called non-contact IC cards) be used in various applications in terms of being maintenance free and a functionality of high-speed data communication provided just by bringing the cards to a reader/writer as train tickets, commuting passes, and lift cards in ski resorts.

Since the above conventional non-contact IC cards do not have a power source in them, neither data contents are shown nor information corresponding to the data contents is shown in terms of power consumption.

Even when a non-contact IC card is used as a train ticket, if the user passes through a gate to get on a train, whether the non-contact IC card is effective is determined and if it is an effective card, only a train fee is paid. When the user has other types of non-contact IC cards, they only function as storage means while being carried without performing any processing.

Therefore, the information processing function of non-contact IC cards are not effectively used.

An object of the present invention is to provide a portable information unit, a control method for a portable information unit, a recording medium, and a control program which obtain a high customer collecting effect and a high advertisement effect or enhance users' senses of unity with an attraction in an amusement facility such as a theme park by displaying effective information with the use of a non-contact-IC-card information processing function when the users carry non-contact IC cards.

To solve the above problems, a portable information unit is characterized by including a radio communication section for receiving a polling signal intermittently sent from an external radio apparatus to allow radio data communication with the external radio apparatus; a display section for displaying various pieces of information; and a display control section for changing information to be displayed on the display section to predetermined information according to an elapsed time from a predetermined reference time specified through the radio communication section.

According to the above structure, the display control section of the portable information unit changes information to be displayed on the display section to the predetermined information according to the elapsed time from the predetermined reference time specified through the radio communication section.

A portable information unit is also characterized by including a radio communication section for receiving a polling signal intermittently sent from an external radio apparatus to allow radio data communication with the external radio apparatus; a display section for displaying various pieces of information; and a display control section for changing information to be displayed on the display section to predetermined information according to a time left until a predetermined reference time specified through the radio communication section.

In these cases, the portable information units may be configured such that information displayed before the change is current-time information indicating the actual current time, and the predetermined information is predetermined time information different from the current-time information. Further, when a predetermined condition is satisfied after the predetermined information is displayed, information displayed on the display section may be set to the current time. Furthermore, the predetermined condition may be that a predetermined time has elapsed from an attraction start or an event start corresponding to the portable information unit. Further, the predetermined information may be forthcoming-event information, advertisement information, or information prompting the user to come to an amusement facility. Furthermore, the portable information units may further include a link operation section for performing an operation linked to the predetermined information with the use of sound, light, or vibration, as the predetermined information is displayed on the display section.

A control method for a portable information unit having a display section is characterized by including the steps of receiving a polling signal intermittently sent from an external radio apparatus to perform radio data communication with the external radio apparatus; and changing information to be displayed on the display section to predetermined information according to an elapsed time from a predetermined reference time specified through the radio data communication.

A control method for a portable information unit having a display section is also characterized by including the steps of receiving a polling signal intermittently sent from an external radio apparatus to perform radio data communication with the external radio apparatus; and changing information to be displayed on the display section to predetermined information according to a time left until a predetermined reference time specified through the radio data communication.

In these cases, the control methods may be configured such that information displayed before the change is current-time information indicating the actual current time, and the predetermined information is predetermined time information different from the current-time information, and when a predetermined condition is satisfied after the predetermined information is displayed, information displayed on the display section is set to the current time. Further, the predetermined condition may be that a predetermined time has elapsed from an attraction start or an event start corresponding to the portable information unit. Further, the predetermined information may be forthcoming-event information, advertisement information, or information prompting the user to come to an amusement facility. Furthermore, the control method further including the step of performing an operation linked to the predetermined information with the use of sound, light, or vibration, as the predetermined information is displayed on the display section.

A recording medium recording a control program for a portable information unit having a display section is characterized in that the control program includes the steps of receiving a polling signal intermittently sent from an external radio apparatus to perform radio data communication with the external radio apparatus; and changing information to be displayed on the display section to predetermined information according to an elapsed time from a predetermined reference time specified through the radio data communication.

According to the above structure, the control program stored in the recording medium makes the portable information unit receive a polling signal intermittently sent from an external radio apparatus to perform radio data communication with the external radio apparatus; and change information to be displayed on the display section to predetermined information according to an elapsed time from the predetermined reference time specified through the radio data communication.

A recording medium recording a control program for a portable information unit having a display section is characterized in that the control program includes the steps of receiving a polling signal intermittently sent from an external radio apparatus to perform radio data communication with the external radio apparatus; and changing information to be displayed on the display section to predetermined information according to a time left until a predetermined reference time specified through the radio data communication.

According to the above structure, the control program stored in the recording medium makes the portable information unit receive a polling signal intermittently sent from an external radio apparatus to perform radio data communication with the external radio apparatus; and change information to be displayed on the display section to predetermined information according to the time left until the predetermined reference time specified through the radio data communication.

A control program for a portable information unit having a display section is characterized by making the portable information unit receive a polling signal intermittently sent from an external radio apparatus to perform radio data communication with the external radio apparatus; and change information to be displayed on the display section to predetermined information according to an elapsed time from a predetermined reference time specified through the radio data communication.

According to the above structure, the control program stored in the recording medium makes the portable information unit receive a polling signal intermittently sent from an external radio apparatus to perform radio data communication with the external radio apparatus; and change information to be displayed on the display section to predetermined information according to an elapsed time from the predetermined reference time specified through the radio data communication.

A control program for a portable information unit having a display section is characterized by making the portable information unit receive a polling signal intermittently sent from an external radio apparatus to perform radio data communication with the external radio apparatus; and change information to be displayed on the display section to predetermined information according to a time left until a predetermined reference time specified through the radio data communication.

According to the above structure, the control program stored in the recording medium makes the portable information unit receive a polling signal intermittently sent from an external radio apparatus to perform radio data communication with the external radio apparatus; and change information to be displayed on the display section to predetermined information according to the time left until the predetermined reference time specified through the radio data communication.

Embodiments of the present invention will now be described by way of further example only and with reference to the accompanying drawings, in which:-
Fig. 1 is a block diagram of an outlined structure of an information service system according to an embodiment the present invention.
Fig. 2 is a block diagram of an outlined structure of an attraction server.
Fig. 3 is a block diagram of an outlined structure of a reader/writer apparatus.
Fig. 4 is a perspective view of a gate for easily managing entries and exits, with reader/writer apparatuses being installed at the gate.
Fig. 5 is a block diagram of an outlined structure of a wrist-watch-type information unit.
Fig. 6 is a block diagram of an outlined structure of a carrier detection circuit.
Fig. 7 is a sectional view of the wrist-watch-type information unit.
Fig. 8 is a timing chart of communication performed when a user enters a theme park.
Fig. 9 is a flowchart of processing performed when a user purchases a ticket.
Fig. 10 is a flowchart of processing performed when a user exits an amusement facility (theme park).
Fig. 11 is a flowchart of processing performed when a user uses an attraction.
Fig. 12 is a flowchart of processing performed when a user uses an attraction (with a plurality of attraction waiting gates being provided).
Fig. 13 is a flowchart of processing performed when a user participates in an event.
Fig. 14 is a view showing a relationship table between the reader/writer apparatus and a display image.
Fig. 15 is a view showing display screens.

A preferred embodiment of the present invention will be described next by referring to the drawings.

### [1] Structure of information service system

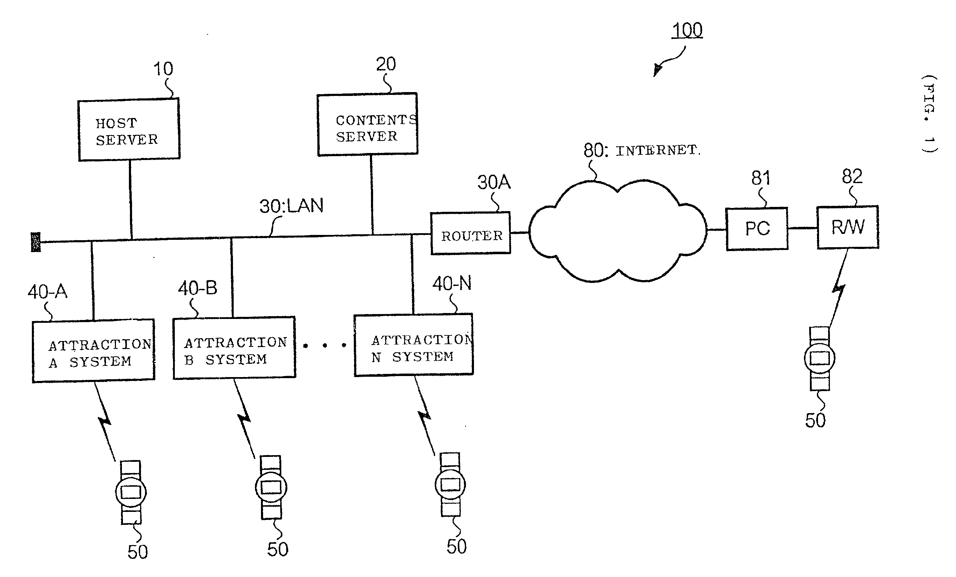

An outlined structure of an information service system will be described first by referring to Fig. 1. In the following description, an information service system which manages entry and exit in a theme park having a plurality of attraction facilities and provides users with various pieces of information related to entry and exit will be mentioned.

### [1.1] Outlined structure of information service system

An outline of an information service system according to the present embodiment will be described first by referring to Fig. 1.

The information service system shown in Fig. 1 is an example system which provides users serving as customers with various pieces of information in a theme park having a plurality of attraction facilities.

The information service system 100 includes a host server 10, a contents server 20, a LAN 30, attraction systems 40-A to 40-N, and wrist-watch-type information units 50.

The host server 10 controls the entire information service system 100. The host server 10 is also connected to the attraction systems 40-A to 40-N disposed at attraction facilities through the LAN 30, and has a function for summing the numbers of persons coming and leaving, collected at each attraction facility and use conditions. In addition, if equipment of an attraction facility becomes out of order, for example, the host server 10 also has a function for sending out-of-order information to the attraction systems 40-A to 40-N, so that the users of attraction facilities do not get confused.

The contents server 20 distributes various pieces of service information.

The LAN 30 is a LAN laid in attraction facilities in the theme park. The LAN 30 can be connected to the Internet 80 through a router 30A.

The attraction systems 40-A to 40-N are provided at entry and exit gates of the theme park and at entry and exit gates of each attraction facility, manages entry and exit, and actually distributes the various pieces of service information distributed from the contents server 20 to the wrist-watch-type information units 50.

The wrist-watch-type information units 50 have a built-in non-contact-IC-card function and a display which shows various pieces of information.

The wrist-watch-type information units 50 can also be connected to the information service system 100 through the Internet 80, a personal computer 81, and a reader/writer apparatus 82 having a function similar to that of a reader/writer apparatus 45, described later, and can be used for purchase of tickets and can receive distribution of various pieces of service information through the Internet 80.

### [1.2] Structure of attraction server system

The attraction systems 40-A to 40-N have almost the same structure.

Therefore, in the following description, an attraction system will be noted by taking the attraction A system 40-A as an example.

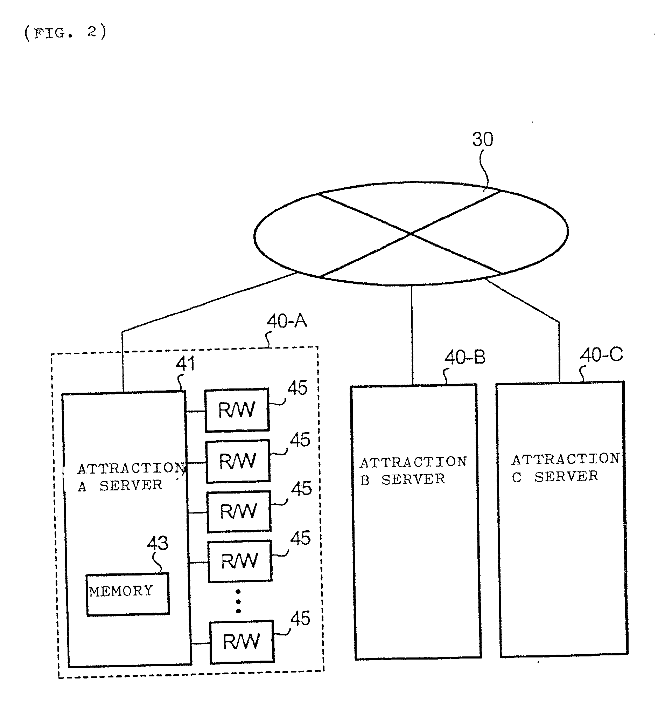

Fig. 2 is a block diagram of an outlined structure of the attraction A system 40-A.

As shown in Fig. 2, the attraction A system 40-A is formed of an attraction server 41 and reader/writer (R/W) apparatuses 45.

The attraction server 41-A has a memory 43 for storing various pieces of information (data) to be provided for the users, and manages information collection and information distribution at an attraction facility A corresponding to the attraction server 41-A.

The reader/writer apparatuses 45 are disposed at entry and exit gates of the attraction facility A, and at appropriate places in paths where users walk through in the attraction facility A, or at entry and exit gates of the theme park; transfers information read from a wrist-watch-type information unit 50 to the attraction server 41-A; or transmits information sent from the attraction server 41-A to a wrist-watch-type information unit 50 and has the unit write the information in it. The reader/writer apparatuses 45 also have a write-watch-type information unit 50 perform a predetermined display operation according to control information sent from the attraction server 41-A, or sets such that a wrist-watch-type information unit 50 performs a predetermined operation when a predetermined time elapses.

### [1.3] Structure of reader/writer apparatuses

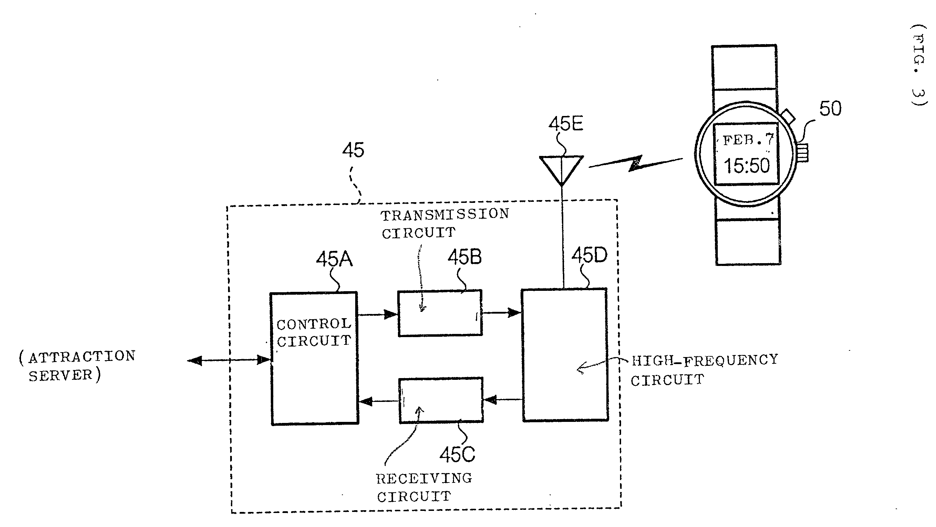

The reader/writer apparatuses will be described next in detail by referring to Fig. 3.

Fig. 3 is a block diagram of an outlined structure of the reader/writer apparatuses 45.

A reader/writer apparatus 45 is formed of a control circuit 45A, a transmission circuit 45B, a receiving circuit 45C, a high-frequency circuit 45D, and an antenna 45E.

The control circuit 45A controls the entire reader/writer apparatus 45.

The transmission circuit 45B generates and outputs a transmission-control signal under the control of the control circuit 45A.

The receiving circuit 45C demodulates a received signal input from the high-frequency circuit 45D, and outputs received data to the control circuit 45A.

The high-frequency circuit 45D transfers a signal to and from an external apparatus through the antenna 45E.

In this case, the transmission circuit 45B outputs a signal having a frequency of, for example, 13.56 MHz or 125 kHz. Since the transmission distance of this output signal is set to about several centimeters to several tens of centimeters, the user needs to bring his/her wrist-watch-type information unit 50 close to the antenna 45E for information communication.

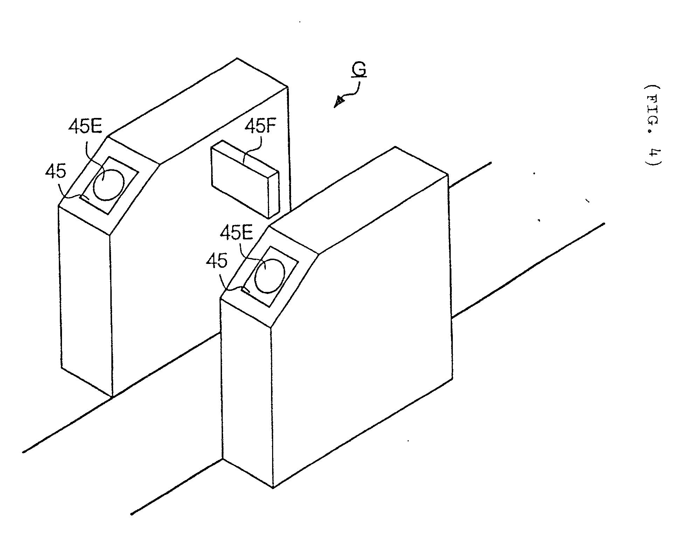

Fig. 4 is a perspective view of an entry and exit gate G in which a reader/writer apparatus 45 is installed in an attraction facility.

As shown in Fig. 4, the reader/writer apparatus 45 is installed in the entry and exit gate G, and an antenna 45E serving as a loop antenna for data communication is built in and disposed at a part of the entry and exit gate G. When the user brings his/her wrist-watch-type information unit 50 having a non-contact-IC-card function to the antenna 45E when passing through the gate G, bi-directional data communication is performed.

There is shown a gate barrier 45F which opens and closes. Whether the gate barrier 45F is opened or closed indicates to the user whether the user is allowed to pass through the gate G or not.

### [1.4] Structure of wrist-watch-type information units

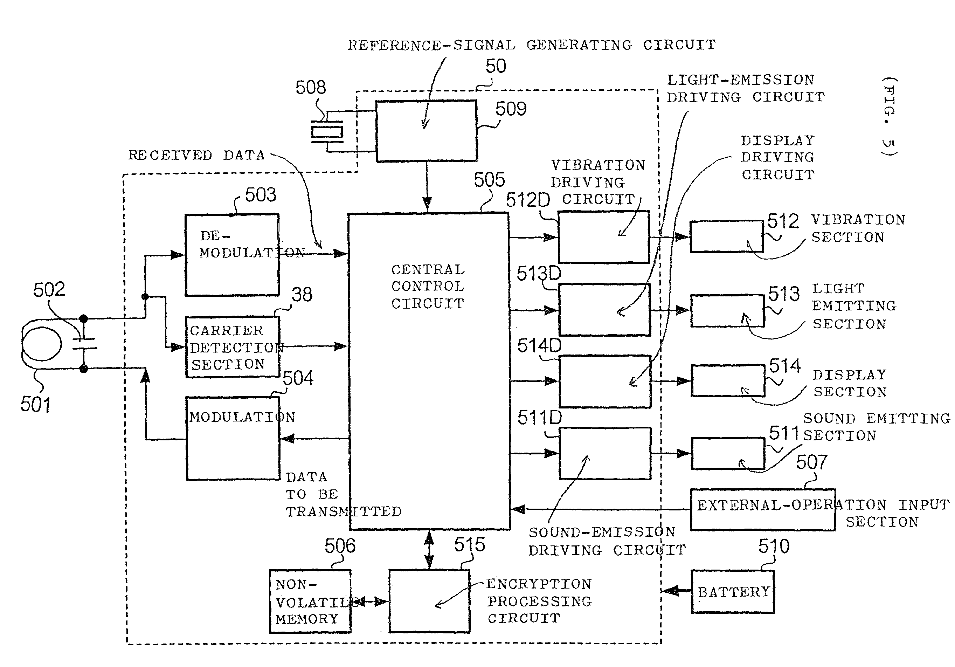

Fig. 5 is a block diagram of an outlined structure of a wrist-watch-type information unit.

The wrist-watch-type information unit 50 is provided with an antenna 501, a tuning capacitor 502, a demodulation circuit 503, a modulation circuit 504, a central control circuit 505, a memory 506, an external-operation input section 507, an oscillator 508, a reference-signal generating circuit 509, a battery 510, a sound emitting section 511, a vibration section 512, a light emitting section 513, a display section 514, driving circuits 511D to 514D, and an encryption processing section 515.

The antenna 501 is a loop antenna.

The tuning capacitor 502 serves as a tank circuit in cooperation with the antenna 501.

The demodulation circuit 503 demodulates a signal received from a reader/writer apparatus 45 through the antenna 501 and outputs received data.

The modulation circuit 504 modulates data to be transmitted, input from the central control circuit 505, and transmits it to a reader/writer apparatus 45 through the antenna 501.

The central control circuit 505 is formed of a microprocessor unit and others, and controls the entire wrist-watch-type information unit 50. In addition, since the central control circuit 505 has the built-in encryption circuit for encrypting data, high security of data is provided.

The memory 506 stores various pieces of data in a non-volatile state. More specifically, the memory 506 is formed of an EEPROM or a flash memory. The memory 506 stores various pieces of data such as received data and an ID number unique to the wrist-watch-type information unit 50.

The external-operation input section 507 is formed of a button and a touch-sensitive panel, and is used by the user for various operations.

The oscillator 508 generates a source oscillation signal having a reference frequency.

The reference-signal generating circuit 509 generates various reference signals according to the source oscillation signal and outputs them.

The battery 510 provides the wrist-watch-type information unit 50 with a necessary power source.

The sound emitting section 511 is driven by a sound-emission driving circuit 511D, and informs the user of various pieces of information by a buzzer or an electronic sound.

The vibration section 512 is driven by a vibration driving circuit 512D, and informs the user of various states by vibration.

The light emitting section 513 is driven by a light-emission driving circuit 513D, is provided with a light-emitting device such as a LED, and informs the user of various states by light.

The display section 514 is driven by a display driving circuit 514D, is formed of a liquid-crystal display panel, and displays various pieces of information.

The encryption processing circuit 515 encrypts data as required under the control of the central control circuit 505.

A carrier detection section 38 detects a carrier wave (carrier signal) sent from a reader/writer apparatus 45.

### [1.4.1] Structure of carrier detection section

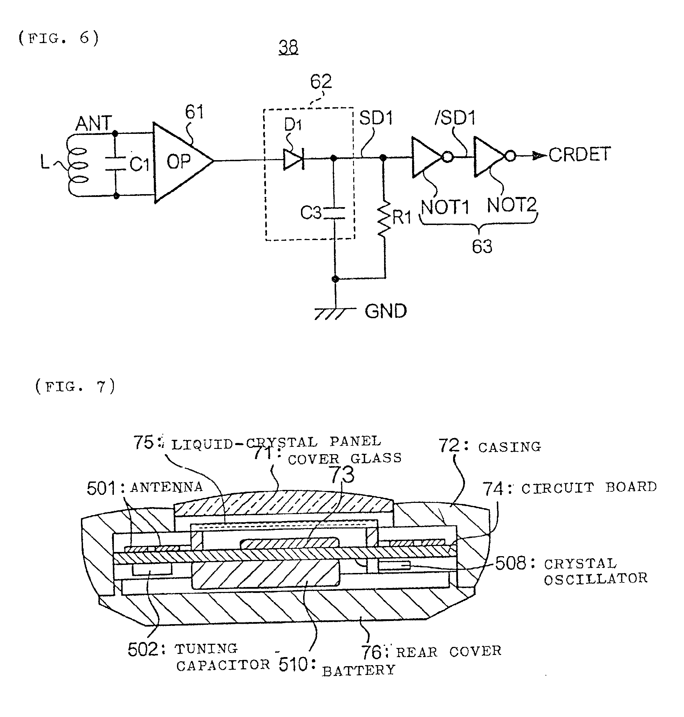

The structure of the carrier detection section will be described next by referring to Fig. 6.

The carrier detection section 38 is formed of an operational amplifier 61 for amplifying an analog received signal input through the tuning capacitor 502 and a coil L which constitutes the antenna 501, and for outputting an amplified analog received signal; a diode detection section 62 for detecting the amplified analog received signal by a diode and outputting a detection signal SD1; a discharging resistor R1 for discharging an electronic charge accumulated by the diode detection section 62 during diode detection; and a buffer section 63 for buffering the output signal of the diode detection section 62 and for outputting a carrier detection signal CRDET.

The diode detection section 62 is formed of a diode D1 of which the anode is connected to the output terminal of the operational amplifier 61, and a capacitor C3 of which one terminal is connected to the cathode of the diode D1 and the other terminal is connected to a lower-potential power source GND.

The buffer section 63 is formed of a first NOT circuit NOT1 which has an input terminal connected to the cathode of the diode D1 and inverts the detection signal SD1 to output an inverted detection signal /SD1, and a second NOT circuit NOT2 which has an input terminal connected to the output terminal of the first NOT circuit NOT1 and inverts the input inverted detection signal /SD1 to output the carrier detection signal CRDET.

The operation of the carrier detection section will be described here.

An analog received signal input through the tuning capacitor 502 and the coil L which constitutes the antenna 501 includes, for example, a carrier signal having a frequency of 13.6 MHz.

When the diode detection section 62 performs detection, the detection signal SD1 having a waveform almost the same as that of the envelope of the carrier signal is output to the buffer section 63.

The buffer section 63 effectively applies waveform-shaping to the detection signal SD1 and outputs the carrier detection signal CRDET.

### [1.4.2]

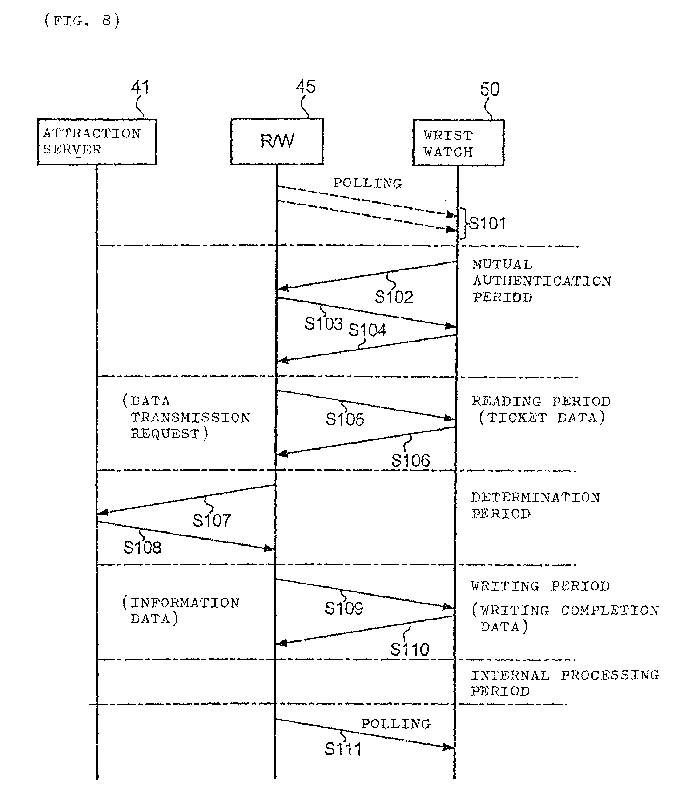

Fig. 7 shows a cross-sectional view of a wrist-watch-type information unit 50.

As shown in Fig. 7, the wrist-watch-type information unit 50 is provided with the antenna 501, a digital-watch control IC module 73 which includes a communication circuit, and a circuit board 74 in a cabinet formed of a cover glass 71, a casing 73, and a rear cover 76.

On the rear surface (lower side in the figure) of the circuit board 74, the crystal oscillator 508 for generating the source oscillation signal having the reference frequency, the battery 510 for supplying electric power to each section of the wrist-watch-type information unit 50, and the tuning capacitor C1 for antenna tuning are provided.

The circuit board 74 has a communication circuit and the antenna for communication.

In a space sandwiched by the digital-watch control IC module 73 and the cover glass 71, a liquid-crystal panel 75 which constitutes the display section 514 for displaying various pieces of information is provided.

### [2] Operation in embodiment

An operation in the embodiment will be described next.

### [2.1] Outlined operation

An outlined operation will be described first by referring to a timing chart shown in Fig. 8.

A reader/writer apparatus 45 sends a polling signal (transmission request) at a predetermined interval (step S101). When a wrist-watch-type information unit 50 enters a communication area, the wrist-watch-type information unit 50 stops displaying, starts communication, and sends data for mutual authentication to the reader/writer apparatus 45 (step S102).

Then, a mutual-authentication period starts. The reader/writer apparatus 45 checks if the wrist-watch-type information unit 50 has entered its communication area, and sends data for mutual authentication to the wrist-watch-type information unit 50 (step S103).

When the wrist-watch-type information unit 50 receives the data for mutual authentication from the reader/writer apparatus 45, the wrist-watch-type information unit 50 sends response data indicating that mutual authentication has been finished, to the reader/writer apparatus 45 (step S104).

As a result, a reading period starts. The reader/writer apparatus 45 sends data-transmission-request data so as to read ticket data from the wrist-watch-type information unit 50 (step S105).

The wrist-watch-type information unit 50 reads corresponding ticket data at a memory address of the non-volatile memory, corresponding to the data-transmission-request data, and sends it to the reader/writer apparatus 45 (step S106).

As a result, a determination period starts. The reader/writer apparatus 45 sends the received ticket data to the attraction server 41 (step S107). Then, the attraction server 41 recognizes the type and the available period of the received ticket data, performs determination, and sends a result of determination to the reader/writer apparatus 45 (step S108).

When the reader/writer apparatus 45 receives the result of determination, it enters a writing period, and sends information data which needs update, such as an entry and exit flag, a flag indicating passage at a predetermined position, remaining-ticket data for coupon tickets, and new additional data, to the wrist-watch-type information unit 50 (step S109).

The wrist-watch-type information unit 50 receives the information data, and sends writing-completion data indicating that writing has been finished, to the reader/writer apparatus 45 (step S110).

Then, communication has been completed, and the wrist-watch-type information unit 50 enters an internal-processing period. The wrist-watch-type information unit 50 performs writing at corresponding memory addresses in the non-volatile memory, and the reader/writer apparatus 45 checks that data transmission to the wrist-watch-type information unit 50 has been completed, and becomes ready for the next polling processing (step S111).

In this case, in the mutual-authentication period, the reading period, the determination period, the writing period, and the internal-processing period, it is also possible that display at the wrist-watch-type information unit 50 remains stopped.

### [2.2] At purchase of ticket

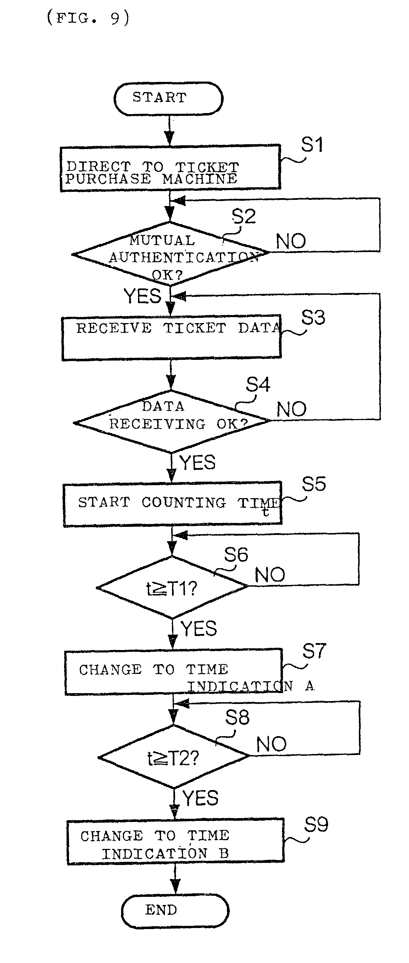

Fig. 9 is a flowchart of specific processing performed when a ticket is purchased.

In this case, it is assumed that the wrist-watch-type information unit 50 does not start transmitting a signal by itself, but performs transmission as a response when it receives a polling signal from the reader/writer apparatus 45.

To purchase a ticket, the user inserts money for ticket purchase into a ticket purchase machine not shown, and brings the wrist-watch-type information unit 50 close to a loop antenna of the ticket purchase machine and directs it toward the antenna (step S1).

The wrist-watch-type information unit 50 determines whether it has received a polling signal sent from the antenna 45E of the reader/writer apparatus 45 at the predetermined interval by a start-stop synchronization protocol.

More specifically, the control circuit 45A of the reader/writer apparatus 45 makes the transmission circuit 45B generate a polling signal, and keeps sending the polling signal through the high-frequency circuit 45D and the antenna 45E.

In the wrist-watch-type information unit 50, the polling signal is input to the demodulation circuit 503 through the antenna 501.

The demodulation circuit 503 outputs received data corresponding to the polling signal to the central control circuit 505. Therefore, the central control circuit 505 can determine that the wrist-watch-type information unit 50 has received the polling signal.

If the polling signal is not received in the above-described procedure, the wrist-watch-type information unit 50 enters a waiting state, and the time is indicated on the display section 514.

When the polling signal has been received, the central control circuit 505 performs mutual authentication with the reader/writer apparatus 45. The reader/writer apparatus 45 determines by checking the ID number NID of the wrist-watch-type information unit 50 whether mutual authentication has been finished (step S2).

More specifically, the control circuit 45A of the reader/writer apparatus 45 asks the wrist-watch-type information unit 50 to send the ID number of the wrist-watch-type information unit 50.

In other words, the control circuit 45A of the reader/writer apparatus 45 sends an ID-information request signal as a transmission signal to the wrist-watch-type information unit 50 through the transmission circuit 45B, the high-frequency circuit 45D, and the antenna 45E.

In the wrist-watch-type information unit 50, the ID-information request signal is input to the demodulation circuit 503 through the antenna 501.

The demodulation circuit 503 outputs received data corresponding to the ID-information request signal to the central control circuit 505.

The central control circuit 505 reads the ID number from the non-volatile memory 506, and sends transmission data corresponding to the ID number to the reader/writer apparatus 45.

As a result, when the reader/writer apparatus 45 confirms the ID number of the wrist-watch-type information unit 50 (Yes in step S2), the reader/writer apparatus 45 sends ticket data to the wrist-watch-type information unit 50, and the wrist-watch-type information unit 50 receives the ticket data and writes it into the non-volatile memory 506 (step S3).

Then, the wrist-watch-type information unit 50 determines whether the ticket data has been received (step S4).

When the ticket data has not yet been received in the determination of step S4 (No in step S4), the proceeding again proceeds to step S3, and the processes are repeated until the ticket data has been correctly received. If the ticket data has not yet been received correctly after ticket-data receiving processing is repeated a predetermined number of times, an error indication is displayed, the money for ticket purchase is returned, and the processing is terminated.

When it is determined in step S4 that the ticket data has been received, counting time t is started (step S5).

It is determined whether time T1 has elapsed since the purchase of the ticket (step S6).

In this case, the time T1 can be set to any value depending on the form of the information service system.

More specifically, when purchased ticket data is for a ticket having a specified date for the use of the theme park (attraction), the time T1 is, for example, set to a time corresponding to the date one week before the date when the theme park (attraction) is to be used, according to the ticket-purchase date and the date when the attraction is to be used.

With this setting, when the date one week before the date when the theme park (attraction) is to be used has passed, time indication on the display section 514 is changed to time indication A (step S7).

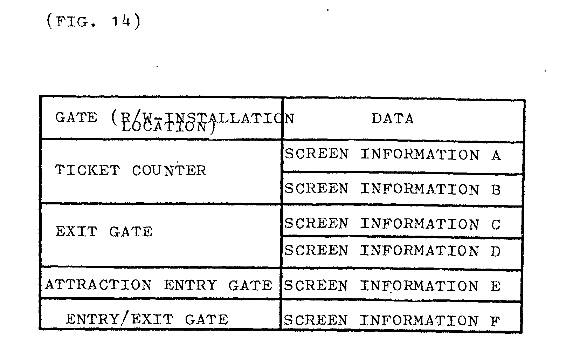

Data to be displayed after time indication is changed is stored in advance in the non-volatile memory 506 formed of an EEPROM, an FERAM, or a flash memory, and is read with communication with the reader/writer apparatus 45 being regarded as a trigger. The relationship between the reader/writer apparatus 45 serving as a trigger and display data is also stored in the non-volatile memory 506 in advance in the same way as for the display data, and its example relationship is shown in Fig. 14.

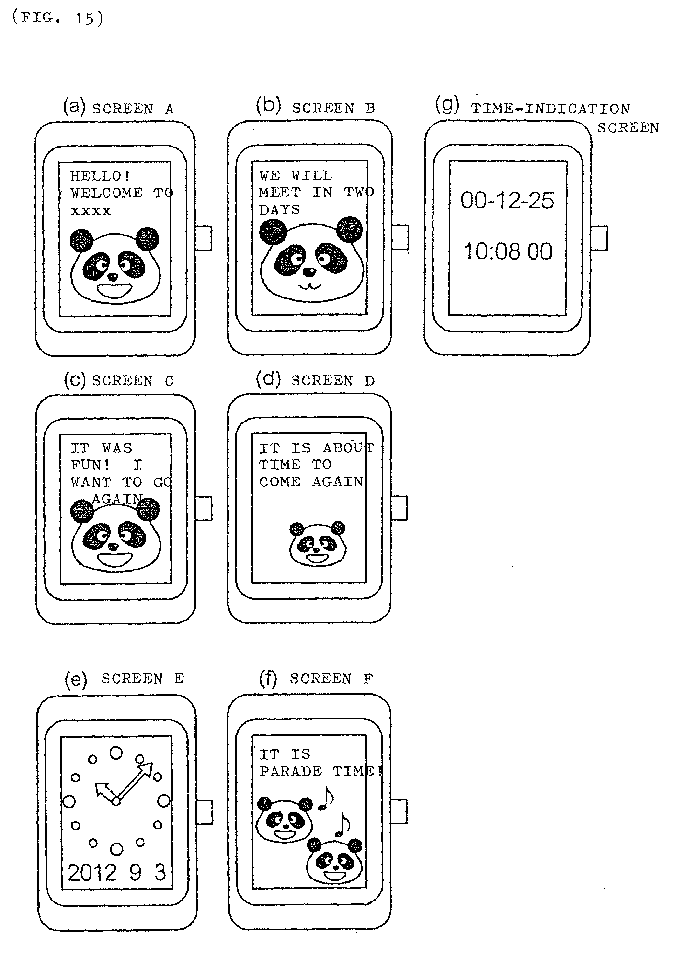

As shown in Fig. 15(a), for example, a character (mascot) corresponding to the theme park, saying "Hello! Welcome to xxxx" or the character gesturing to indicate that the character is looking forward to meeting with you is displayed on the display section 514, which arouses the interest of the person who has purchased a ticket of the theme park until the person actually visits the theme park.

Then, it is determined whether time T2 (> T1) has elapsed since the purchase of the ticket (step S8).

In this case, the time T2 can be set to any value depending on the form of the information service system, in the same way as for the time T1.

More specifically, when purchased ticket data is for a ticket having a specified date for the use of the theme park (attraction), the time T2 is, for example, set to a time corresponding to the date two days before the date when the attraction is to be used, according to the ticket-purchase date and the date when the attraction is to be used.

With this setting, when the date two days before the date when the theme park (attraction) is to be used has passed, time indication on the display section 514 is changed to time indication B (step S9).

As shown in Fig. 15(b), for example, a character corresponding to the attraction, saying "We will meet in two days" or the character gesturing to indicate that the character cannot wait more in the theme park is displayed on the display section 514, which further arouses the interest of the person who has purchased a ticket of the theme park until the person actually visits the theme park.

### [2.3] At exit of theme park

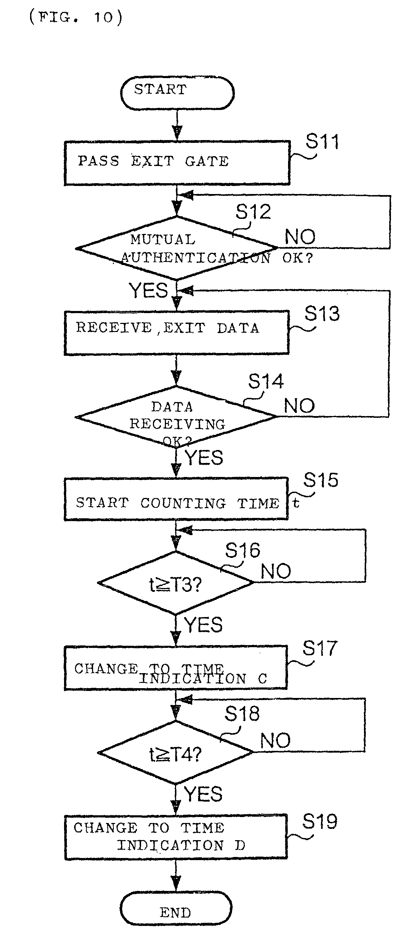

Fig. 10 is a flowchart of specific processing performed when the user leaves the theme park.

When the user leaves the theme park, the user passes through an exit gate such as that shown in Fig. 4, and brings the wrist-watch-type information unit 50 close to a loop antenna disposed at the exit gate and directs it toward the antenna (step S11).

The wrist-watch-type information unit 50 determines whether it has received a polling signal sent from the antenna 45E of the reader/writer apparatus 45 at the predetermined interval by a start-stop synchronization protocol.

More specifically, the control circuit 45A of the reader/writer apparatus 45 makes the transmission circuit 45B generate a polling signal, and keeps sending the polling signal through the high-frequency circuit 45D and the antenna 45E. As a result, in the wrist-watch-type information unit 50, the polling signal is input to the demodulation circuit 503 through the antenna 501.

The demodulation circuit 503 outputs received data corresponding to the polling signal to the central control circuit 505. Therefore, the central control circuit 505 can determine that the wrist-watch-type information unit 50 has received the polling signal.

If the polling signal is not received in the above-described procedure, the wrist-watch-type information unit 50 enters a waiting state, and the time is indicated on the display section 514.

When the polling signal has been received, the central control circuit 505 performs mutual authentication with the reader/writer apparatus 45 in the same way as when a ticket is purchased. The reader/writer apparatus 45 determines by checking the ID number NID of the wrist-watch-type information unit 50 whether mutual authentication has been finished (step S12).

When the reader/writer apparatus 45 confirms the ID number of the wrist-watch-type information unit 50 (Yes in step S12), the reader/writer apparatus 45 sends exit data to the wrist-watch-type information unit 50, and the wrist-watch-type information unit 50 receives the exit data and writes it into the non-volatile memory 506 (step S13).

Then, the wrist-watch-type information unit 50 determines whether the exit data has been received (step S14).

When the exit data has not yet been received in the determination of step S14 (No in step S14), the proceeding again proceeds to step S13, and the processes are repeated until the exit data has been correctly received. If the exit data has not yet been received correctly after exit-data receiving processing is repeated a predetermined number of times, an error indication is displayed, and the processing is terminated.

When it is determined in step S14 that the exit data has been received, counting elapsed time t after exit is started (step S15).

It is determined whether time T3 has elapsed since the user has exited the theme park (attraction) (step S16).

In this case, the time T3 can be set to any value depending on the form of the information service system.

More specifically, when the user exits from the theme park (attraction), the time T3 is, for example, set to a time corresponding to the date one year after the date when the user visited the theme park (attraction) last, according to the date of exit.

With this setting, when the date one year after the date when the user visited the theme park (attraction) last has passed, time indication on the display section 514 is changed to time indication C (step S17).

As shown in Fig. 15(c), for example, a character (mascot) corresponding to the theme park, saying "It was fun. I want to go again" or saying "Let's come to the theme park again" to ask the user to come, which prompts the user to come to the theme park again.

Then, it is determined whether time T4 (> T3) has elapsed since the user has exited (step S18).

In this case, the time T4 can be set to any value depending on the form of the information service system, in the same way as for the time T3.

More specifically, the time T4 is, for example, set to a time corresponding to the date two years after the date when the user visited the theme park (attraction) last, according to the date when the user exited.

With this setting, when the date two years after the date when the user visited the theme park (attraction) last has passed, time indication on the display section 514 is changed to time indication D (step S19).

As shown in Fig. 15(d), for example, the character (mascot) corresponding to the attraction, saying "It's about time to come again" or the character becoming sulky, turning his/her back, and complaining "Nobody brings me to the theme park" is displayed on the display section 514, which prompts the user to come to the theme park.

It is also possible that new event information data is sent together when the exit data is sent.

When the exit date is May 10, 2001, for example, event information data indicating that a new event will start July 1, 2001 is sent to the wrist-watch-type information unit 50. The wrist-watch-type information unit 50 is allowed to calculate the number of days corresponding to a difference between the time and date when the user exited and those when the event starts, reduce the number of days as time passes, and display the character (mascot) corresponding to the theme park together with a message of "xx days left until the new event starts" or "New event coming soon," according to the remaining number of days to prompt the user to come to the theme park.

### [2.4] At use of attraction

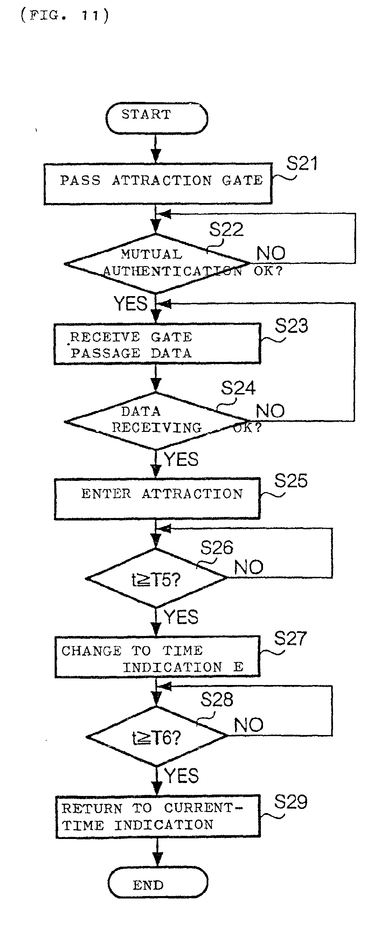

Fig. 11 is a flowchart of specific processing performed when an attraction is used in the theme park.

When the user enters an attraction facility to use an attraction, if the user passes through an attraction gate having a similar function to that of the entry and exit gate shown in Fig. 4, the user brings the wrist-watch-type information unit 50 close to a loop antenna disposed at the attraction gate and directs it toward the antenna (step S21).

The wrist-watch-type information unit 50 determines whether it has received a polling signal sent from the antenna 45E of the reader/writer apparatus 45 at the predetermined interval by a start-stop synchronization protocol.

More specifically, the control circuit 45A of the reader/writer apparatus 45 makes the transmission circuit 45B generate a polling signal, and keeps sending the polling signal through the high-frequency circuit 45D and the antenna 45E. As a result, in the wrist-watch-type information unit 50, the polling signal is input to the demodulation circuit 503 through the antenna 501.

The demodulation circuit 503 outputs received data corresponding to the polling signal to the central control circuit 505. Therefore, the central control circuit 505 can determine that the wrist-watch-type information unit 50 has received the polling signal.

If the polling signal is not received in the above-described procedure, the wrist-watch-type information unit 50 enters a waiting state, and the time is indicated on the display section 514.

When the polling signal has been received, the central control circuit 505 performs mutual authentication with the reader/writer apparatus 45 in the same way as when a ticket is purchased. The reader/writer apparatus 45 determines by checking the ID number NID of the wrist-watch-type information unit 50 whether mutual authentication has been finished (step S22).

When the reader/writer apparatus 45 confirms the ID number of the wrist-watch-type information unit 50 (Yes in step S22), the reader/writer apparatus 45 sends gate passage data corresponding to the attraction to the wrist-watch-type information unit 50, and the wrist-watch-type information unit 50 receives the gate passage data indicating that the user passed through the attraction gate and writes it into the non-volatile memory 506 (step S23).

Then, the wrist-watch-type information unit 50 determines whether the gate passage data has been received (step S24).

When the gate passage data has not yet been received in the determination of step S24 (No in step S24), the proceeding again proceeds to step S23, and the processes are repeated until the gate passage data has been correctly received. If the gate passage data has not yet been received correctly after gate-passage-data receiving processing is repeated a predetermined number of times, the user is informed of the state by a buzzer sound and an error indication, and a process for asking the user to contact a stuff member of the attraction facility is performed.

When it is determined in step S24 that the gate passage data has been received, if the user moves in the attraction facility and reaches an actual attraction site (entrance of attraction) (step S25), another reader/writer apparatus 45 is also disposed there and mutual authentication with the another reader/writer apparatus 45 is performed. When the reader/writer apparatus 45 checks the ID number of the wrist-watch-type information unit 50, the reader/writer apparatus 45 sends attraction-entry data to the wrist-watch-type information unit 50. Counting elapsed time t from the entry of the attraction starts (step S25).

Then, the wrist-watch-type information unit 50 receives the attraction-entry data indicating that the user has actually entered the attraction, and determines whether time T5 has elapsed since the user has actually entered the attraction (step S26).

In this case, the time T5 can be set to any value depending on the form of the information service system.

More specifically, when the user moves by a vehicle in the attraction after the entry, the time T5 is set to a predetermined-position passage time with the speed of the vehicle being taken into consideration, and when the user walks in the attraction, the time T5 is set to a general predetermined-position passage time.

With this setting, when a predetermined time has elapsed since the attraction has started, in other words, when the user reaches the predetermined position in the attraction facility, time indication on the display section 514 is changed to time indication E (step S27).

As shown in Fig. 15(e), for example, a virtual time (such as September 3, 2012, instead of the actual current time, December 25, 2000) in the attraction, or the character (mascot) corresponding to the theme park, saying "Something is approaching" to enhance the expectation of the user or the character saying "What is that disposed above" to prompt the user to perform an action related to the attraction is displayed on the display section 514.

Then, it is determined whether time T6 (> T5) has elapsed since the attraction has started, in other words, it is determined whether a schedule time for the end of the attraction corresponding to the user has elapsed (step S28).

In this case, the time T6 can be set to any value depending on the form of the information service system, in the same way as for the time T5.

With this setting, when the attraction-end schedule time has elapsed, time indication on the display section 514 is returned to the current-time indication (in the above case, 10:08, December 25, 2000) as shown in Fig. 15(g) (step S29).

With the above-described processing, when an attraction of a time machine is used, for example, wrist-watch indication can be automatically changed to a past time or a future time according to the progress of the attraction used by the user to further enhance the user's sense of unity with the attraction.

### [2.5] At use of attraction (when a plurality of attraction waiting gates are provided)

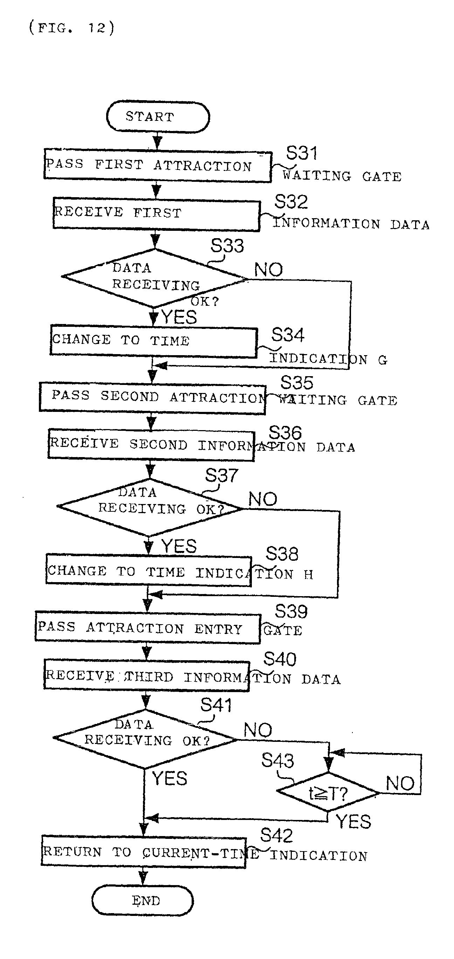

Fig. 12 is a flowchart of specific processing performed when an attraction is used in the theme park and a plurality of attraction waiting gates are provided.

When the user enters an attraction facility to use an attraction, if the user passes through a first attraction waiting gate having a similar function to that of the entry and exit gate shown in Fig. 4, the user brings the wrist-watch-type information unit 50 close to a loop antenna disposed at the first attraction waiting gate and directs it toward the antenna (step S31).

The wrist-watch-type information unit 50 determines whether it has received a polling signal sent from the antenna 45E of the reader/writer apparatus 45 at the predetermined interval by a start-stop synchronization protocol.

More specifically, the control circuit 45A of the reader/writer apparatus 45 makes the transmission circuit 45B generate a polling signal, and keeps sending the polling signal through the high-frequency circuit 45D and the antenna 45E. As a result, in the wrist-watch-type information unit 50, the polling signal is input to the demodulation circuit 503 through the antenna 501.

The demodulation circuit 503 outputs received data corresponding to the polling signal to the central control circuit 505. Therefore, the central control circuit 505 can determine that the wrist-watch-type information unit 50 has received the polling signal.

If the polling signal is not received in the above-described procedure, the wrist-watch-type information unit 50 enters a waiting state, and the time is indicated on the display section 514.

When the polling signal has been received, the central control circuit 505 performs mutual authentication with the reader/writer apparatus 45 in the same way as when a ticket is purchased. The reader/writer apparatus 45 determines by checking the ID number NID of the wrist-watch-type information unit 50 whether mutual authentication has been finished.

When the reader/writer apparatus 45 confirms the ID number of the wrist-watch-type information unit 50, the reader/writer apparatus 45 sends first information data corresponding to the passage of the first attraction waiting gate to the wrist-watch-type information unit 50, and the wrist-watch-type information unit 50 receives the first information data and writes it into the non-volatile memory 506 (step S32).

Then, the wrist-watch-type information unit 50 determines whether the first information data has been received (step S33).

When the first information data has not yet been received in the determination of step S33 (No in step S33), the processing proceeds to step S35.

When it is determined in step S33 that the first information data has been received, time indication on the display section 514 is changed to time indication G corresponding to the first information data due to the passage of the first attraction waiting gate (step S34).

When the user passes through a second attraction waiting gate, the user brings the wrist-watch-type information unit 50 close to a loop antenna disposed at the second attraction waiting gate and directs it toward the antenna (step S35).

The wrist-watch-type information unit 50 determines in the same procedure as described above whether it has received a polling signal sent from the antenna 45E of the reader/writer apparatus 45 at the predetermined interval by a start-stop synchronization protocol.

If the polling signal is not received in the above-described procedure, the wrist-watch-type information unit 50 enters a waiting state, and the time is indicated on the display section 514.

When the polling signal has been received, the central control circuit 505 performs mutual authentication with the reader/writer apparatus 45 in the same way as when a ticket is purchased. The reader/writer apparatus 45 determines by checking the ID number NID of the wrist-watch-type information unit 50 whether mutual authentication has been finished.

When the reader/writer apparatus 45 confirms the ID number of the wrist-watch-type information unit 50, the reader/writer apparatus 45 sends second information data corresponding to the passage of the second attraction waiting gate to the wrist-watch-type information unit 50, and the wrist-watch-type information unit 50 receives the second information data and writes it into the non-volatile memory 506 (step S36).

Then, the wrist-watch-type information unit 50 determines whether the second information data has been received (step S37).

When the second information data has not yet been received in the determination of step S37 (No in step S37), the processing proceeds to step S39.

When it is determined in step S37 that the second information data has been received, time indication on the display section 514 is changed to time indication H corresponding to the second information data due to the passage of the second attraction waiting gate (step S38).

When the user further moves in the attraction facility and reaches an actual attraction site (entrance of attraction) (step S39), another reader/writer apparatus 45 is also disposed there and mutual authentication with the another reader/writer apparatus 45 is performed. When the reader/writer apparatus 45 checks the ID number of the wrist-watch-type information unit 50, the reader/writer apparatus 45 sends third information data to the wrist-watch-type information unit 50 (step S40).

Then, the wrist-watch-type information unit 50 determines whether the third information data has been received (step S41).

When the third information data has not yet been received in the determination of step S41 (No in step S41), counting time t elapsing after the user enters the attraction is started, and it is determined whether time T has elapsed after the user actually entered the attraction (step S43).

When it is determined in step S43 that time T has not elapsed after the user actually entered the attraction (No in step S43), the wrist-watch-type information unit 50 enters a waiting state.

When it is determined in step S43 that time T has elapsed after the user actually entered the attraction (Yes in step S43), or when it is determined in step S41 that the third information data has been received, time indication on the display section 514 is returned to the current-time indication (step S42).

With the above processing, since various indications can be made according to the progress in the attractions, the user's sense of unity with the attraction is further enhanced.

### [2.6] At event participation

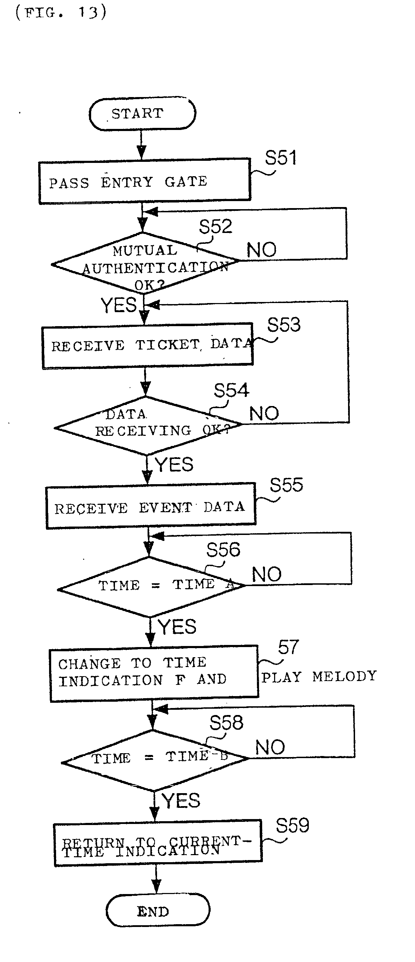

Fig. 13 is a flowchart of specific processing performed when the user participates in various events performed in the theme park.

When the user passes through the entry and exit gate shown in Fig. 4 into the theme park, the user brings the wrist-watch-type information unit 50 close to a loop antenna disposed at the entry and exit gate and directs it toward the antenna (step S51).

The wrist-watch-type information unit 50 determines whether it has received a polling signal sent from the antenna 45E of the reader/writer apparatus 45 at the predetermined interval by a start-stop synchronization protocol.

More specifically, the control circuit 45A of the reader/writer apparatus 45 makes the transmission circuit 45B generate a polling signal, and keeps sending the polling signal through the high-frequency circuit 45D and the antenna 45E. As a result, in the wrist-watch-type information unit 50, the polling signal is input to the demodulation circuit 503 through the antenna 501.

The demodulation circuit 503 outputs received data corresponding to the polling signal to the central control circuit 505. Therefore, the central control circuit 505 can determine that the wrist-watch-type information unit 50 has received the polling signal.

If the polling signal is not received in the above-described procedure, the wrist-watch-type information unit 50 enters a waiting state, and the time is indicated on the display section 514.

When the polling signal has been received, the central control circuit 505 performs mutual authentication with the reader/writer apparatus 45 in the same way as when a ticket is purchased. The reader/writer apparatus 45 determines by checking the ID number NID of the wrist-watch-type information unit 50 whether mutual authentication has been finished (step S52).

When the reader/writer apparatus 45 confirms the ID number of the wrist-watch-type information unit 50 (Yes in step S52), the reader/writer apparatus 45 sends entry data to the wrist-watch-type information unit 50, and the wrist-watch-type information unit 50 receives the entry data indicating that the user has passed through the entry and exit gate into the theme park and writes it into the non-volatile memory 506 (step S53).

Then, the wrist-watch-type information unit 50 determines whether the entry data has been received (step S54).

When the entry data has not yet been received in the determination of step S54 (No in step S54), the proceeding again proceeds to step S53, and the processes are repeated until the entry data has been correctly received. If the entry data has not yet been received correctly after entry-data receiving processing is repeated a predetermined number of times, the user is informed of the state by a buzzer sound and an error indication, and a process for asking the user to contact a staff member of the theme park is performed.

When it is determined in step S54 that the entry data has been received, mutual authentication with the reader/writer apparatus 45 is performed. When the reader/writer apparatus 45 checks the ID number of the wrist-watch-type information unit 50, the reader/writer apparatus 45 sends event data in the theme park in that day together with an event start time A and an processing end time B to the wrist-watch-type information unit 50. In this case, the event data includes musical data for playing music in addition to text and image data.

Then, the wrist-watch-type information unit 50 determines whether the current time matches the event start time A (step S56).

When the current time matches the event start time A, time indication on the display section 514 is changed to time indication F (such as that shown in Fig. 15(f)), and a predetermined melody is played (sound is emitted) (step S57).

Then, the wrist-watch-type information unit 50 determines whether the current time matches the processing end time B (step S58).

When the current time matches the processing end time B, time indication on the display section 514 is returned to the current-time indication, and a predetermined melody is played (sound is emitted) (step S59). In this case, the processing end time may be a time reached when a predetermined time elapses after the event start time, or an event end time.

According to the above processing, all event participants feel a sense of unity, further enhancing the event.

In the above case, when a melody is played at the event start time, it is more effective that the reader/writer apparatus 45 sends at entry or at event-data transmission a command for calibrating the time of each wrist-watch-type information unit 50 to a reference current time to make the times of the plurality of wrist-watch-type information units 50 equal. In this case, it is also possible that the difference between the current time used by each user before matching and the reference current time is stored and the time of the wrist-watch-type information unit 50 of each user is set back to the current time used by the user before matching with the difference being taken into consideration after the event. With this operation, the system can handle the user who intentionally sets the wrist-watch-type information unit 50 early or late.

In the foregoing description, a melody is played as an operation linked to the indication of information. It is also possible that a linking operation section is provided, including a moving-picture display apparatus, a vibration communication apparatus, and a light emitting apparatus which independently or in parallel display a moving picture, vibrate a wrist-watch-type information unit 50, and emit light.

### [3] Advantages in embodiment

As described above, according to the present embodiment, with an effective use of the non-contact-IC-card information processing function, when the users carry wrist-watch-type information units, a high customer collecting effect and a high advertisement effect are obtained. Alternatively, users' senses of unity with an attraction or an event can be enhanced.

### [4] Modifications of embodiment

### [4.1] First modification

As described above, in the present embodiment, all data is transmitted at one operation of data transmission while the user has a wrist-watch-type information unit 50 at his/her wrist. In a system which sends a large amount of communication data for a long transmitting and receiving time, data transmission and receiving may be performed at a plurality of times with the use of a plurality of reader/writer apparatuses.

### [4.2] Second modification

In the above description, the method of the bi-directional radio communication was not mentioned. It needs to be any method which allows local communication within about 1 m to 10 m. A communication protocol such as Bluetooth (registered trademark), which uses a radio frequency band of 2.45 GHz, needs to be used.

### [4.3] Third modification

In the above description, the wrist-watch-type information unit was described as a portable radio communication unit. It can have various forms if the user can have it with him/her, such as a necklace type or a pendant type.

### [4.4] Fourth modification

In the above description, the control program used in the microprocessor unit of the central control circuit is stored in advance in a semiconductor storage apparatus (recording medium) such as a non-volatile memory. It is also possible that the control program is stored in a recording medium, such as an optical disk, including a compact disk (CD) or a compact-disk recordable (CD-R), a magneto-optical-type disk, including magneto-optical disk (MO) or a Mini Disk (MD), or a magnetic disk, including a hard disk or a flexible disk, and supplied; the control program is installed into the memory of the wrist-watch-type information unit from the recording medium with the use of a radio communication function or others; and the microprocessor unit constituting the central control circuit executes the control program.

It is also possible that the control program is directly downloaded to the memory of the wrist-watch-type information unit from a network and installed; and the microprocessor unit constituting the central control circuit executes the control program.

According to the present invention, since, with an effective use of the information processing function of a portable information processing apparatus, information displayed on a display section is changed to predetermined information (such as publicity information or advertisement information according to an elapsed time from a predetermined reference time specified through a radio communication section or a time left until a predetermined reference time, a publicity effect or an advertisement effect is easily obtained, and users' senses of convenience and users senses of unity with an amusement facility which has asked the publicity or the advertisement are enhanced.

## Claims

1. A portable information unit comprising:
a radio communication section for receiving a polling signal intermittently sent from an external radio apparatus to allow radio data communication with the external radio apparatus;
a display section for displaying various pieces of information; and
a display control section for changing information to be displayed on the display section to predetermined information according to an elapsed time from a predetermined reference time specified through the radio communication section.

2. A portable information unit comprising:
a radio communication section for receiving a polling signal intermittently sent from an external radio apparatus to allow radio data communication with the external radio apparatus;
a display section for displaying various pieces of information; and
a display control section for changing information to be displayed on the display section to predetermined information according to a time left until a predetermined reference time specified through the radio communication section.

3. A portable information unit according to one of Claims 1 and 2,
wherein information displayed before the change is current-time information indicating the actual current time, and the predetermined information is predetermined time information different from the current-time information.

4. A portable information unit according to Claim 3, wherein, when a predetermined condition is satisfied after the predetermined information is displayed, information displayed on the display section is set to the current time.

5. A portable information unit according to Claim 4, wherein the predetermined condition is that a predetermined time has elapsed from an attraction start or an event start corresponding to the portable information unit.

6. A portable information unit according to one of Claims 1 and 2, wherein the predetermined information is forthcoming-event information, advertisement information, or information prompting the user to come to an amusement facility.

7. A portable information unit according to one of Claims 1 and 2, further comprising a link operation section for performing an operation linked to the predetermined information with the use of sound, light, or vibration, as the predetermined information is displayed on the display section.

8. A control method for a portable information unit having a display section, comprising the steps of:
receiving a polling signal intermittently sent from an external radio apparatus to perform radio data communication with the external radio apparatus; and
changing information to be displayed on the display section to predetermined information according to an elapsed time from a predetermined reference time specified through the radio data communication.

9. A control method for a portable information unit having a display section, comprising the steps of:
receiving a polling signal intermittently sent from an external radio apparatus to perform radio data communication with the external radio apparatus; and
changing information to be displayed on the display section to predetermined information according to a time left until a predetermined reference time specified through the radio data communication.

10. A control method for a portable information unit according to one of Claims 8 and 9,
wherein information displayed before the change is current-time information indicating the actual current time, and the predetermined information is predetermined time information different from the current-time information, and
when a predetermined condition is satisfied after the predetermined information is displayed, information displayed on the display section is set to the current time.

11. A control method for a portable information unit according to Claim 10, wherein the predetermined condition is that a predetermined time has elapsed from an attraction start or an event start corresponding to the portable information unit.

12. A control method for a portable information unit according to one of Claims 8 and 9, wherein the predetermined information is forthcoming-event information, advertisement information, or information prompting the user to come to an amusement facility.

13. A control meted for a portable information unit according to one of Claims 8 and 9, further comprising the step of performing an operation linked to the predetermined information with the use of sound, light, or vibration, as the predetermined information is displayed on the display section.

14. A recording medium recording a control program for a portable information unit having a display section, the control program comprising the steps of:
receiving a polling signal intermittently sent from an external radio apparatus to perform radio data communication with the external radio apparatus; and
changing information to be displayed on the display section to predetermined information according to an elapsed time from a predetermined reference time specified through the radio data communication.

15. A recording medium recording a control program for a portable information unit having a display section, the control program comprising the steps of:
receiving a polling signal intermittently sent from an external radio apparatus to perform radio data communication with the external radio apparatus; and
changing information to be displayed on the display section to predetermined information according to a time left until a predetermined reference time specified through the radio data communication.

16. A control program for a portable information unit having a display section, the control program making the portable information unit
receive a polling signal intermittently sent from an external radio apparatus to perform radio data communication with the external radio apparatus; and
change information to be displayed on the display section to predetermined information according to an elapsed time from a predetermined reference time specified through the radio data communication.

17. A control program for a portable information unit having a display section, the control program making the portable information unit
receive a polling signal intermittently sent from an external radio apparatus to perform radio data communication with the external radio apparatus; and
change information to be displayed on the display section to predetermined information according to a time left until a predetermined reference time specified through the radio data communication.
